# EUROPEAN PATENT APPLICATION

(11) **EP 4 793 000 A1**
(43) Date of publication of application: **19.08.2026**
(21) Application number: 23955526.1
(22) Date of filing: 10.10.2023
(51) Int. Cl.: B25J 13/08, B25J 5/00, B25J 9/16, B25J 11/00, B25J 19/02, G05D 1/20, G01S 17/93

(54) **ROBOT AND METHOD FOR CONTROLLING SAME**

(71) Applicant: Bear Robotics Korea, Inc., Seoul 04779 (KR)
(72) Inventor: YOU, Seungduck, Seoul 06772 (KR); KIM, Jongo, Seoul 06772 (KR); OH, Hyunju, Seoul 06772 (KR); AN, Hyeungkeun, Seoul 06772 (KR); JEONG, Haecheon, Seoul 06772 (KR); CHOI, Hyungjin, Seoul 06772 (KR)
(74) Representative: Murgitroyd & Company
(86) International application number: PCT/KR2023/015510
(87) International publication number: WO 2025/079739

(57) **Abstract**

A method for controlling a robot, according to one embodiment of the present invention, comprises the steps of: driving in a first driving mode; driving by means of the first driving mode being changed to a second driving mode when a change in weight is detected by a first sensor; driving by means of the first driving mode being changed to a third driving mode when an obstacle is detected by a second sensor; and returning from the third driving mode to the second driving mode when a change in weight is detected by the first sensor.

## Description

### TECHNICAL FIELD

Embodiments of the present disclosure are related to a robot. More specifically, for example, the embodiments may be applied to a robot that autonomously drives in a retail store and to related technologies. It is obvious that the present disclosure is not necessarily limited thereto.

### BACKGROUND ART

Discussions have been made with regard to an autonomous driving robot capable of moving about a retail store.

However, since retail stores are inherently crowded with children, elderly people, and carts operated by customers, there is a high likelihood of the autonomous driving robot coming into contact with other objects.

In addition, in retail stores, there are customers who only visually inspect displayed products and customers who directly pick up products to check the products. Accordingly, research is required on a robot capable of satisfying the diverse needs of such customers.

### DISCLOSURE

### TECHNICAL TASK

One embodiment of the present disclosure provides a system in which a robot actively changes a driving method based on a change in a weight sensor, the number of obstacle detections, etc. for customers who visually check products and customers who directly pick up products to check the products in a retail store.

One embodiment of the present disclosure contributes to efficient product exposure and an increase in sales volume by using a mobile product sales robot.

In addition, one embodiment of the present disclosure provides a robot that provides a customer appreciation greeting/screen, etc. based on a change in the weight of products placed on a shelf and may automatically move to a loading location when products are insufficient.

### TECHNICAL SOLUTIONS

According to one embodiment of the present disclosure, a method of controlling a robot having a shelf capable of accommodating at least one product includes driving in a first driving mode, changing from the first driving mode to a second driving mode and driving in response to detection of a change in weight by a first sensor, changing from the first driving mode to a third driving mode and driving in response to detection of an obstacle by a second sensor, and returning from the third driving mode to the second driving mode in response to detection of a change in weight by the first sensor.

The first driving mode may refer to a mode in which, when an obstacle is detected by the second sensor, driving is stopped for a preset time and then resumed.

The second driving mode may refer to a mode in which, when an obstacle is detected by the second sensor, driving is stopped until the obstacle leaves.

The third driving mode may refer to a mode in which, when an obstacle is detected by the second sensor, the obstacle is avoided and driving is continued.

The method may further include changing to the first driving mode and driving when a preset time has elapsed while driving in the second driving mode.

The first sensor may include a weight detection sensor directly or indirectly connected to the shelf.

The second sensor may include, for example, at least one of a camera or LiDAR.

The method may further include outputting audio or video feedback when the change in weight detected by the first sensor is within a first range, and moving to a preset specific spot when the change in weight detected by the first sensor is within a second range.

According to one embodiment of the present disclosure, a robot including a shelf capable of accommodating at least one product includes a first sensor capable of detecting a change in weight, a second sensor capable of detecting an obstacle, and a controller configured to perform a control operation to drive in a first driving mode, perform a control operation to change from the first driving mode to a second driving mode and drive in response to detection of a change in weight by the first sensor, perform a control operation to change from the first driving mode to a third driving mode and drive in response to detection of an obstacle by the second sensor, and perform a control operation to return from the third driving mode to the second driving mode in response to detection of a change in weight by the first sensor.

Implementing a computer-readable medium (for example, an application, a memory, software, etc.), in which a program for performing any one of the above-described methods and various embodiments described in the present specification is recorded, by a third party also falls within the scope of rights of the present disclosure.

### ADVANTAGEOUS EFFECTS

According to one embodiment of the present disclosure, there is a technical effect of providing a system in which a robot actively changes a driving method based on a change in a weight sensor, the number of obstacle detections, etc.

According to one embodiment of the present disclosure, there is an advantage of contributing to efficient product exposure and an increase in sales volume by using a mobile product sales robot.

In addition, according to one embodiment of the present disclosure, there is a technical effect of providing a robot that provides a customer appreciation greeting/screen, etc. based on a change in the weight of products placed on a shelf and may automatically move to a loading location when products are insufficient.

In addition to the technical effects described above, it is apparent that effects that may be inferred by a person skilled in the art throughout the entire specification should also be considered.

### DESCRIPTION OF DRAWINGS

FIG. 1 schematically illustrates a retail store to which one embodiment of the present disclosure may be applied;
FIG. 2 illustrates various driving modes of a robot according to one embodiment of the present disclosure;
FIG. 3 illustrates a process in which a robot switches a driving mode under a specific condition according to one embodiment of the present disclosure;
FIG. 4 illustrates driving modes changed depending on whether an object detected by a robot is a thing or a person according to one embodiment of the present disclosure;
FIG. 5 schematically illustrates an external appearance of a robot according to one embodiment of the present disclosure;
FIG. 6 is a block diagram illustrating main components of a robot according to one embodiment of the present disclosure; and
FIG. 7 is a flowchart illustrating a method of controlling a robot according to one embodiment of the present disclosure.

### BEST MODE FOR DISCLOSURE

Hereinafter, embodiments disclosed in the present disclosure will be described in detail with reference to the accompanying drawings, and the same or similar components will be given the same reference numerals regardless of reference symbols, and redundant description thereof will be omitted. In the following description, suffixes "module" and "unit" for components used in the following description are assigned and used interchangeably only for convenience of description in the specification, and do not have distinct meanings or roles by themselves.

In addition, in describing the embodiments disclosed in the present specification, when it is determined that a detailed description of related known technology may obscure the gist of the embodiments disclosed in the present specification, the detailed description thereof will be omitted. Further, the accompanying drawings are provided only to facilitate understanding of the embodiments disclosed in the present specification, and the technical idea disclosed in the present specification is not limited by the accompanying drawings. It should be understood that all modifications, equivalents, and substitutes falling within the spirit and technical scope of the present disclosure are employed.

Terms including ordinal numbers such as first and second may be used to describe various components, but the components are not limited by these terms. These terms are used only for the purpose of distinguishing one component from another. When a component is referred to as being "connected" or "coupled" to another component, it should be understood that it may be directly connected or coupled to the other component, or that another component may be interposed therebetween.

On the other hand, when a component is referred to as being "directly connected" or "directly coupled" to another component, it should be understood that no other component is interposed therebetween.

A singular expression includes a plural expression unless the context clearly indicates otherwise.

In the present application, terms such as "comprise" or "have" are intended to designate that features, numbers, steps, operations, components, parts, or combinations thereof described in the specification are present, and it should be understood that the presence or addition of one or more other features, numbers, steps, operations, components, parts, or combinations thereof is not excluded in advance.

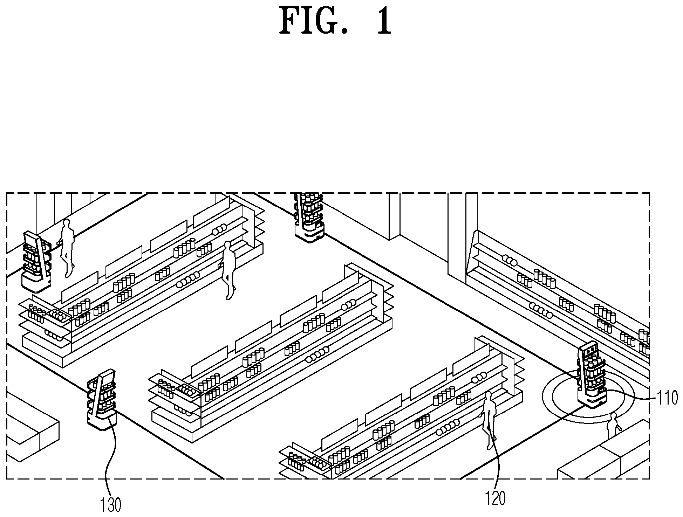

FIG. 1 schematically illustrates a retail store to which one embodiment of the present disclosure may be applied.

As illustrated in FIG. 1, since the retail store has a large number of carts 130, people 120, etc., it is necessary for a robot 110 according to an embodiment of the present disclosure to autonomously drive while avoiding various objects or appropriately providing advertisements for products with respect to a specific object (for example, a person).

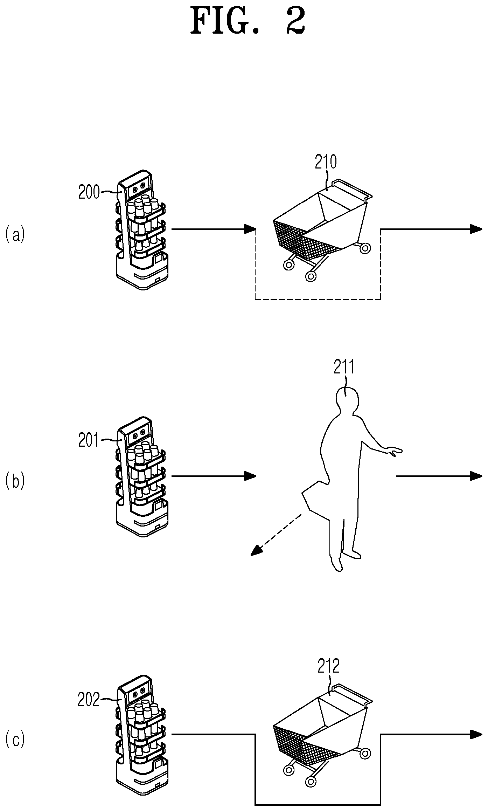

To implement this, driving modes of the robot according to an embodiment of the present disclosure are subdivided into a plurality of sub-modes. A related embodiment will be described in more detail below with reference to FIG. 2.

FIG. 2 illustrates various driving modes of the robot according to one embodiment of the present disclosure.

A first driving mode illustrated in FIG. 2(a) may be referred to as a "Wait & Go" driving mode.

As illustrated in FIG. 2(a), when a robot 200 according to an embodiment of the present disclosure operates in the first driving mode, if an obstacle 210 is detected by a sensor such as a camera or LiDAR, the robot stops driving for a preset time (for example, 10 seconds), then avoids the obstacle 210, and resumes driving.

A second driving mode illustrated in FIG. 2(b) may be referred to as a "Stop & Go" driving mode.

As illustrated in FIG. 2(b), when a robot 201 according to an embodiment of the present disclosure operates in the second driving mode, if an obstacle 211 is detected by a sensor such as a camera or LiDAR, the robot stops driving until the obstacle 211 leaves. Here, the obstacle 211 may be identified particularly through a camera of the robot 201.

A third driving mode illustrated in FIG. 2(c) may be referred to as an "avoidance driving" mode.

As illustrated in FIG. 2(c), when a robot 202 according to an embodiment of the present disclosure operates in the third driving mode, if an obstacle 212 is detected by a sensor such as a camera or LiDAR, the robot avoids the obstacle 212 and continues driving. Unlike the previous modes, there is an advantage in that there is no waiting time.

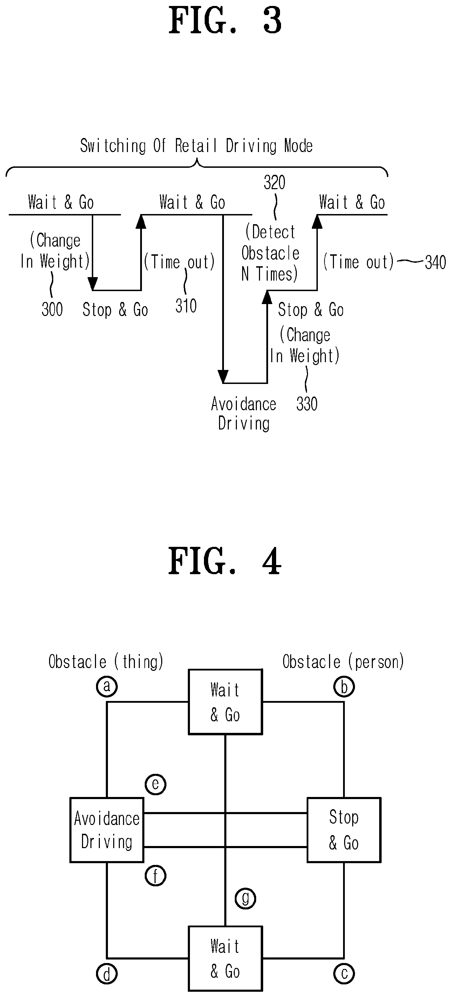

Meanwhile, trigger conditions serving as criteria for switching among the above-described various driving modes may include, for example, recognizing a person using a camera, detecting a change in a weight sensor, or detecting an obstacle using LiDAR. A more detailed embodiment related thereto will be described below with reference to FIG. 3.

FIG. 3 illustrates a process in which a robot switches a driving mode under a specific condition according to one embodiment of the present disclosure.

As illustrated in FIG. 3, first, the robot according to the embodiment of the present disclosure (capable of loading at least one item on a shelf) is designed to drive in the first driving mode (for example, Wait & Go).

In this instance, when a change in weight is detected by a first sensor (for example, a weight detection sensor directly or indirectly connected to a shelf installed in the robot) (300), the robot according to the embodiment of the present disclosure changes from the first driving mode (for example, Wait & Go) to the second driving mode (for example, Stop & Go) and drives.

Meanwhile, when a preset time has elapsed (310) while driving in the second driving mode, the robot according to the embodiment of the present disclosure changes to the above-described first driving mode and drives.

On the other hand, when the robot according to the embodiment of the present disclosure is driving in the first driving mode and an obstacle is detected by a second sensor (including at least one of a camera or LiDAR installed in the robot) (320), the robot changes from the first driving mode to the third driving mode and drives.

Furthermore, the robot according to the embodiment of the present disclosure is designed to return from the third driving mode to the second driving mode when a change in weight is detected by the first sensor (330).

In addition, the robot according to the embodiment of the present disclosure is designed to return again to the above-described first driving mode when a preset time has elapsed (340) while driving in the second driving mode.

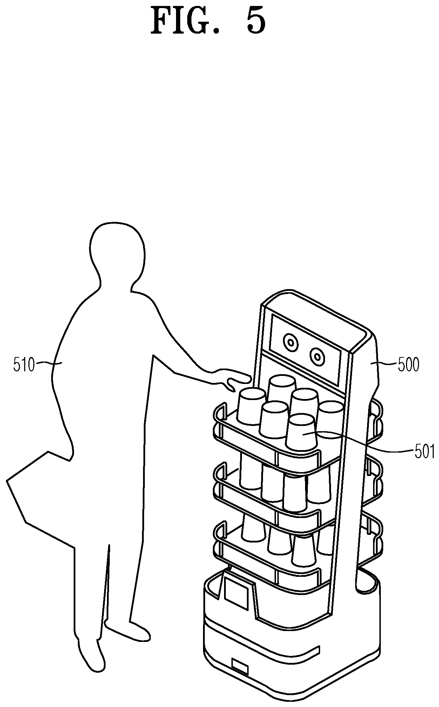

Meanwhile, a robot according to another embodiment of the present disclosure is designed to output audio or video feedback when a change in weight detected by the first sensor is within a first range. On the other hand, the robot is designed to automatically move to a preset specific spot when the change in weight detected by the first sensor is within a second range. A more detailed embodiment related thereto will be described below with reference to FIGs. 5 to 7.

FIG. 4 illustrates driving modes changed depending on whether an object detected by a robot is a thing or a person according to one embodiment of the present disclosure.

First, as illustrated in FIG. 4, it is assumed that the robot according to the embodiment of the present disclosure is driving in the first driving mode (Wait & Go).

In this instance, as illustrated in FIG. 4(a), when the robot detects that an obstacle is a thing (not a person) using LiDAR, a camera, etc., the mode is automatically switched to the third driving mode (avoidance driving).

That is, the embodiment of FIG. 4(a) may be applied, for example, when the robot detects an obstacle (thing) such as a ladder, a basket, or a cart, and thus avoids the obstacle (thing) and continues driving without waiting or stopping.

On the other hand, as illustrated in FIG. 4(b), when the robot detects that an obstacle is a person using LiDAR, a camera, etc., the mode is automatically switched to the second driving mode (Stop & Go).

That is, the embodiment of FIG. 4(b) may be applied, for example, when a customer in a store picks up an item from a shelf of the robot and shows active interest in the product, and it is necessary for the robot to stop and actively promote the product until the person leaves. In this case, from the perspective of the robot, the robot is designed to detect an obstacle (person) using LiDAR, detect the person using a camera, and detect a change in weight on the shelf using a sensor.

Furthermore, the embodiment of FIG. 4(c) is applied when the robot fails to detect a neighboring obstacle (person, thing, etc.) using LiDAR and no change in weight is detected for a preset time. In this case, the robot returns from the second driving mode (Stop & Go) to the first driving mode (Wait & Go).

Meanwhile, the embodiment of FIG. 4(d) is a case in which the robot detects an obstacle using LiDAR and detects a person using a camera, and the robot returns from the third driving mode (for example, avoidance driving) to the first driving mode (for example, Wait & Go).

In addition, the embodiment of FIG. 4(e) corresponds to a case in which the robot detects a change in weight on a shelf using a sensor (for example, when a customer interested in a product placed on the shelf of the robot picks up the product), and in this case, the robot switches from the third driving mode (for example, avoidance driving) to the second driving mode (for example, Stop & Go).

Furthermore, the embodiment of FIG. 4(f) is a case in which the robot detects an obstacle using LiDAR after a preset time has elapsed, but determines that the obstacle is not a person as a result of checking using a camera. In this case, the robot is automatically switched from the second driving mode (Stop & Go) to the third driving mode (avoidance driving).

In addition, the embodiment of FIG. 4(g) is a case in which the robot detects an obstacle (person) using LiDAR, a camera, etc., but no change in weight on the shelf is detected. In this case, the robot maintains the existing driving mode. A reason is that there is no user showing active interest in a product placed on the shelf of the robot (for example, picking up a product), and thus a normal product promotion driving mode is sufficient.

FIG. 5 schematically illustrates an external appearance of a robot according to one embodiment of the present disclosure.

As illustrated in FIG. 5, a robot 500 according to an embodiment of the present disclosure is designed to autonomously drive about a retail store and simultaneously provide various feedback depending on whether a user 510 picks up a product placed on a shelf 501.

The robot 500 according to the embodiment of the present disclosure stores a weight sensor noise filtering algorithm in a memory, and may detect a weight sensor change during acceleration/deceleration of driving, a weight sensor change during product pickup, and a weight sensor change due to external impact on the robot or the shelf.

When there is a weight sensing change of products placed on the shelf 501 (for example, 150 g), customer appreciation feedback according to an individual product reduction is output as audio or video data.

On the other hand, when a change in weight is detected indicating that all products placed on the shelf 501 have been removed, the robot automatically moves to a specific spot to reload the corresponding products.

More specifically, for example, when the robot 500 according to the embodiment of the present disclosure detects a change in the weight sensor during acceleration/deceleration of driving, the robot 500 recognizes this as a sudden situation involving a cart or a customer, and outputs a safety driving guide video and voice (for example, regarding children running nearby).

In addition, through communication with a server, the robot 500 or the server accumulates sudden deceleration information for each location in the store to build a database of congested sections.

Meanwhile, various types of UX is provided in response to the robot 500 according to the embodiment of the present disclosure detecting a change in the weight sensor due to product pickup on the shelf 501. For example, when it is determined that a customer has picked up a product, an appreciation screen for product purchase (video/image) or a voice service is provided. Meanwhile, when it is detected that all products have left the shelf 501, the robot 500 provides a message and voice service indicating a product shortage on a screen and automatically moves to a product replenishment location.

Furthermore, through communication with the server, the robot 500 or the server accumulates the number of product pickup occurrences for each location in the store to build a database of optimal times and locations for product exposure. In addition, when products on the shelf 501 are insufficient, a related message is transmitted via SMS/App push to a mobile device of a manager managing the store, etc. Further, an average time period for complete sell-out of each product by day of the week/time zone is stored in a database to reflect selection of a next promotional product.

In addition, when the robot 500 according to the embodiment of the present disclosure detects a change in the weight sensor due to external impact, a guide message requesting to refrain from applying physical impact to the robot 500 is provided as a video or voice service.

Furthermore, through communication with the server, the robot 500 or the server transmits a related message (for example, "request for on-site dispatch") via SMS/App push to a mobile device of a store manager, etc.

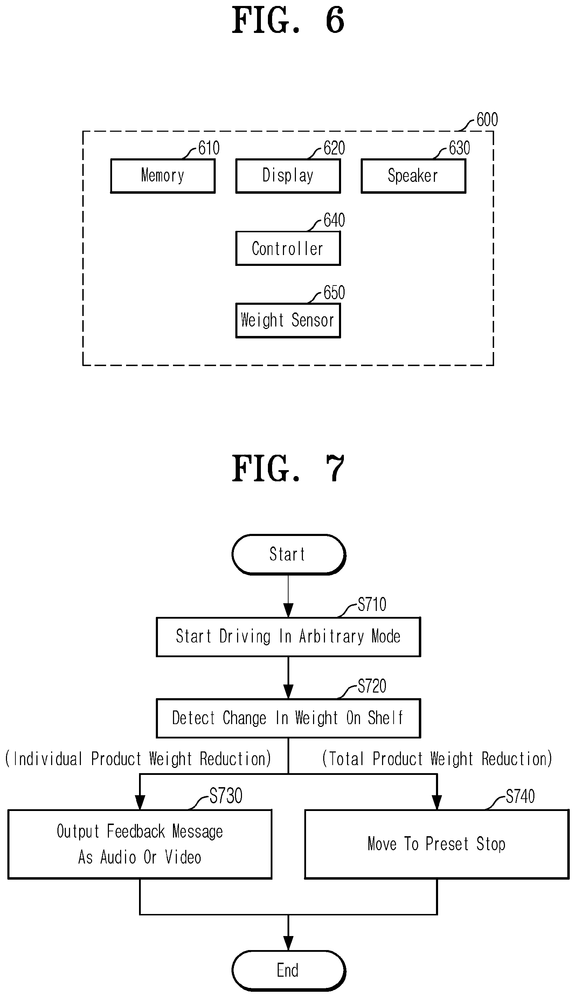

FIG. 6 is a block diagram illustrating main components of a robot according to one embodiment of the present disclosure.

A robot 600 according to an embodiment of the present disclosure includes, in appearance, a shelf (not illustrated) on which at least one product may be loaded.

As illustrated in FIG. 6, the robot includes a memory 610, a display 620, a speaker 630, a controller 640, a weight sensor 650, etc.

The weight sensor 650 is designed to be able to detect a change in weight on a shelf. This sensor may be referred to as a first sensor.

A camera/LiDAR (not illustrated) is designed to be able to detect obstacles around the robot 600. This sensor may be referred to as a second sensor.

The controller 640 controls driving in the first driving mode, and when a change in weight is detected by the first sensor (for example, the weight sensor 650), the controller 640 performs a control operation so that the robot changes from the first driving mode to the second driving mode and drives.

Furthermore, when an obstacle is detected by the second sensor (for example, the camera/LiDAR), the controller 640 performs a control operation so that the robot changes from the second driving mode to the third driving mode and drives.

In addition, when a change in weight is detected by the first sensor, the controller 640 performs a control operation so that the robot returns from the third driving mode to the second driving mode.

The first driving mode refers to, for example, a mode in which, when an obstacle is detected by the second sensor, the robot stops driving for a preset time and then resumes driving.

The second driving mode refers to, for example, a mode in which, when an obstacle is detected by the second sensor, the robot stops driving until the obstacle leaves.

Further, the third driving mode refers to, for example, a mode in which, when an obstacle is detected by the second sensor, the robot avoids the obstacle and continues driving.

Meanwhile, when a change in weight detected by the first sensor is within a first range, the controller 640 controls the display 620 or the speaker 630 to output audio or video feedback.

In addition, when a change in weight detected by the first sensor is within a second range, the controller 640 performs a control operation so that the robot moves to a preset specific spot. A more detailed embodiment related thereto will be described below with reference to FIG. 7.

In addition, FIG. 7 is a flowchart illustrating a method of controlling a robot according to one embodiment of the present disclosure.

A robot according to an embodiment of the present disclosure starts driving in an arbitrary mode (S710). In this embodiment, the robot may drive in any other mode in addition to the above-described three modes.

In this instance, the robot is designed to detect a change in weight on a shelf (S720). It is assumed that at least one or more products (for example, N products) are placed on the shelf.

When only a decrease in weight equivalent to 1 to N-1 products (a change in weight within a first range) is detected, the robot according to the embodiment of the present disclosure outputs a feedback message as audio or video (S730).

On the other hand, when a decrease in weight equivalent to N products (a change in weight within a second range) is detected, the robot according to the embodiment of the present disclosure automatically moves to a preset specific spot (S740). Here, the specific spot refers to, for example, a place where a large number of the corresponding products is stored.

The present disclosure may be implemented as code readable by a computer in a medium in which a program is recorded. A computer-readable medium includes all types of recording devices in which data readable by a computer system is stored. Examples of the computer-readable medium include an application, an HDD (Hard Disk Drive), an SSD (Solid State Disk), an SDD (Silicon Disk Drive), a ROM, a RAM, a CD-ROM, a magnetic tape, a floppy disk, and an optical data storage device, and implementation in the form of a carrier wave (for example, transmission through the Internet) is employed.

Even though the data processing apparatus and method according to embodiments of the present disclosure have been described above as specific embodiments, this is merely an example and the present disclosure is not limited thereto, and should be construed as having the broadest scope in accordance with the basic idea disclosed in this specification. A person skilled in the art may implement unstated embodiments by combining or substituting the disclosed embodiments, but this also does not depart from the scope of rights of the present disclosure. In addition, a person skilled in the art may easily modify or transform the disclosed embodiments based on this specification, and it is apparent that such modifications or transformations also belong to the scope of rights of the present disclosure.

### MODE FOR CARRYING OUT DISCLOSURE

With respect to various embodiments for implementing the present disclosure, as described above in the previous section, BEST MODE FOR DISCLOSURE, redundant descriptions will be omitted.

### INDUSTRIAL APPLICABILITY

Since the present disclosure is applicable to various types of robots, and moreover may be used in retail stores, etc., industrial applicability is recognized.

## Claims

1. A method of controlling a robot having a shelf capable of accommodating at least one product, the method comprising:
driving in a first driving mode;
changing from the first driving mode to a second driving mode and driving in response to detection of a change in weight by a first sensor;
changing from the first driving mode to a third driving mode and driving in response to detection of an obstacle by a second sensor; and
returning from the third driving mode to the second driving mode in response to detection of a change in weight by the first sensor.

2. The method of claim 1, wherein:
the first driving mode refers to a mode in which, when an obstacle is detected by the second sensor, driving is stopped for a preset time and then resumed,
the second driving mode refers to a mode in which, when an obstacle is detected by the second sensor, driving is stopped until the obstacle leaves, and
the third driving mode refers to a mode in which, when an obstacle is detected by the second sensor, the obstacle is avoided and driving is continued.

3. The method of claim 1, further comprising changing to the first driving mode and driving when a preset time has elapsed while driving in the second driving mode.

4. The method of claim 1, wherein:
the first sensor includes a weight detection sensor directly or indirectly connected to the shelf, and
the second sensor includes at least one of a camera or LiDAR.

5. The method of claim 1, further comprising:
outputting audio or video feedback when the change in weight detected by the first sensor is within a first range; and
moving to a preset specific spot when the change in weight detected by the first sensor is within a second range.

6. A robot having a shelf capable of accommodating at least one product, the robot comprising:
a first sensor capable of detecting a change in weight;
a second sensor capable of detecting an obstacle; and
a controller configured to:
perform a control operation to drive in a first driving mode,
perform a control operation to change from the first driving mode to a second driving mode and drive in response to detection of a change in weight by the first sensor,
perform a control operation to change from the first driving mode to a third driving mode and drive in response to detection of an obstacle by the second sensor, and
perform a control operation to return from the third driving mode to the second driving mode in response to detection of a change in weight by the first sensor.

7. The robot of claim 6, wherein:
the first driving mode refers to a mode in which, when an obstacle is detected by the second sensor, driving is stopped for a preset time and then resumed,
the second driving mode refers to a mode in which, when an obstacle is detected by the second sensor, driving is stopped until the obstacle leaves, and
the third driving mode refers to a mode in which, when an obstacle is detected by the second sensor, the obstacle is avoided and driving is continued.

8. The robot of claim 6, wherein the controller performs a control operation to change to the first driving mode and drive when a preset time has elapsed while driving in the second driving mode.

9. The robot of claim 6, wherein:
the first sensor includes a weight detection sensor directly or indirectly connected to the shelf, and
the second sensor includes at least one of a camera or LiDAR.

10. The robot of claim 6, wherein:
the controller performs a control operation to output audio or video feedback when the change in weight detected by the first sensor is within a first range; and
the controller performs a control operation to move to a preset specific spot when the change in weight detected by the first sensor is within a second range.
